# EUROPÄISCHE PATENTSCHRIFT

(11) **EP 2 399 047 B1**
(45) Veröffentlichungstag und Bekanntmachung des Hinweises auf die Patenterteilung: **29.05.2013**
(21) Anmeldenummer: 10704504.9
(22) Anmeldetag: 06.02.2010
(51) Int. Cl.: F16H 57/00

(54) **VERFAHREN ZUR GERÄUSCHREDUZIERUNG IM ANTRIEBSSTRANG EINES KRAFTFAHRZEUGS**
METHOD FOR REDUCING NOISE IN THE DRIVE TRAIN OF MOTOR VEHICLE
PROCÉDÉ DE RÉDUCTION DU BRUIT DANS LA CHAÎNE CINÉMATIQUE D'UN VÉHICULE À MOTEUR

(30) Priorität: 20.02.2009 DE 102009009861
(43) Veröffentlichungstag der Anmeldung: 28.12.2011
(73) Patentinhaber: Bayerische Motoren Werke Aktiengesellschaft, 80809 München (DE)
(72) Erfinder: SOLLER, Tobias, 85737 Ismaning (DE); EBERT, Thomas, 81929 München (DE)
(86) Internationale Anmeldenummer: PCT/EP2010/000746
(87) Internationale Veröffentlichungsnummer: WO 2010/094407

(56) Entgegenhaltungen:
- EP-A1- 1 617 108
- EP-A2- 1 903 239
- DE-A1- 3 330 332
- DE-A1-102006 008 207
- DE-A1-102007 004 182
- DE-A1-102007 055 151
- DE-A1-102008 032 757
- JP-A- 3 113 160

## Beschreibung

Die Erfindung bezieht sich auf ein Verfahren zur Geräuschreduzierung im Antriebsstrang eines Kraftfahrzeugs mit automatisiertem Getriebe oder Handschaltgetriebe mit steuerbarer Öldruckversorgung und/oder automatisierter Anfahrkupplung bei Leerlauf nach dem Oberbegriff des Anspruchs 1, wie offenbart in der DE 10 2007 055 151 A1.

Derzeit erfolgt die Kraftübertragung im Antriebsstrang von Kraftfahrzeugen zwischen der motorseitigen Antriebseinheit und der Getriebeeingangswelle über eine Steckzahnverbindung. Diese Steckzahnverbindung kann die motorseitige Antriebswelle entweder direkt oder über ein zwischengeschaltetes Zweimassen-Schwungrad (welches als Teil der motorseitigen Antriebseinheit zu sehen ist) mit der Getriebeeingangswelle verbinden. Derartige Zweimassen-Schwungräder werden vor allem zur Drehungleichförmigkeitstilgung im Antriebsstrang zwischen der Kurbelwelle und der Getriebeeingangswelle eingesetzt, so dass auftretende Schwingungsamplituden des Motors ausgefiltert werden können. Diese Steckzahnverbindung zwischen der motorseitigen Antriebseinheit (mit oder ohne Zweimassen-Schwungrad) und der Getriebeeingangswelle ist aus montagetechnischen Gründen in der Regel spielbehaftet. Ein entsprechender Aufbau eines Antriebsstrangs mit einer Steckzahnverbindung ist bspw. aus der DE102007055151A1 bekannt.

Aufgrund der Drehungleichförmigkeit des Motors kommt es im Leerlauf in der spielbehafteten Steckzahnverbindung zwischen der motorseitigen Antriebseinheit und der Getriebeeingangswelle zu einem häufigen Anlegen und Abheben der Zahnflanken der Verzahnung. Dadurch entstehen Geräusche, die auch unter dem Begriff "Leerlauf-Klackern" bekannt sind. Unter Umständen kann dieses Geräusch Beanstandungen hervorrufen.

Um derartige Geräusche zu unterbinden, sind bereits Überlegungen in Richtung mechanischer Änderungen vorgenommen worden. Derartige mechanische Lösungen sind jedoch kompliziert und teuer in der Herstellung und Umsetzung.

Weiter sind bereits verschiedene Verfahren zur Geräuschreduzierung von im Getriebe auftretenden Geräuschen, dem sog. Rasseln bekannt. So offenbart die DE 10 2007 004 182 A1 ein Verfahren zur Rasselreduzierung in einem Handschaltgetriebe, wobei im Leerlauf eine Pumpe zur Einspritzschmier-Realisierung beim Getriebe-Radsatz derart eingesetzt wird, dass die Rasselneigung durch ein gezielt eingebrachtes Schleppmoment reduziert wird. Weitere Verfahren zur Rasselreduzierung sind auch aus der JP 3 113160 A und der DE 10 2006 008 207 A1 bekannt.

Aufgabe der Erfindung ist es, eine kostengünstige Lösung zur Reduzierung der im Leerlauf auftretenden Geräusche in der spielbehafteten Steckzahnverbindung anzugeben.

Diese Aufgabe wird durch ein Verfahren nach Anspruch 1 gelöst. Vorteilhafte Weiterbildungen ergeben sich aus den abhängigen Ansprüchen.

Das erfindungsgemäße Verfahren ist insbesondere für Kraftfahrzeuge mit automatisierten Getrieben, wie z. B. sog. Doppelkupplungsgetrieben vorgesehen, bei denen an der Schnittstelle zwischen Antriebseinheit und Getriebe eine Steckzahnverbindung angeordnet ist. Es ist aber auch für Fahrzeuge mit Handschaltgetrieben mit steuerbarer Öldruckversorgung und/oder automatisierter Anfahrkupplung geeignet. Diese Steckzahnverbindung verbindet die motorseitige Antriebseinheit bzw. Antriebswelle mit der Getriebeeingangswelle durch eine Steckzahnverbindung. Wie bereits eingangs erläutert wurde, kann die motorseitige Antriebseinheit ein Zweimassen-Schwungrad zur Drehungleichförmigkeitstilgung umfassen. Da die Steckzahnverbindung zwischen der motorseitigen Antriebseinheit und der Getriebeeingangswelle in der Regel aus montagetechnischen Gründen mit Spiel behaftet ist, wird zur Reduzierung des aufgrund des Spiels der Steckzahnverbindung hervorgerufenen Geräusches erfindungsgemäß vorgeschlagen, eine Anpassung der Getriebesteuerung im Leerlauf dahingehend vorzunehmen, dass die Geräuschentwicklung vermieden oder zumindest reduziert werden kann. Durch die rein softwaretechnische Realisierung der Geräuschreduzierung entstehen in der Produktion keine zusätzlichen Herstellungskosten.

Vorteilhafterweise wird die Ansteuerung des Getriebes im Leerlauf derart angepasst, dass über die Steckzahnverbindung ein erhöhtes Drehmoment übertragen wird. Dadurch kann das Abheben der Zahnflanken (was zu der Geräuschentwicklung führt) verhindert oder zumindest deutlich abgemildert werden.

Zur Erhöhung des übertragenen Drehmoments durch Anpassung der Getriebesteuerung gibt es verschiedene Realisierungsmöglichkeiten. Die im Folgenden vorgeschlagenen Maßnahmen beziehen sich auf Software-Lösungen, welche v. a. bei automatisierten Getrieben, die sich in Neutralstellung oder Parkstellung befinden, durchgeführt werden können.

In einer ersten Ausgestaltungsmöglichkeit des erfindungsgemäßen Verfahrens kann die Getriebesteuerung im Leerlauf derart angepasst werden, dass das Pumpenaufnahmemoment einer Hydraulikpumpe, welche für die hydraulische Aktuierung vorgesehen ist, erhöht wird. Zur Erhöhung des Pumpenaufnahmemoments der Hydraulikpumpe wird vorteilhafterweise der Systemdruck erhöht.

Alternativ oder zusätzlich zu dieser Maßnahme kann die Getriebesteuerung im Leerlauf auch derart angepasst werden, dass eine Erhöhung des von der Kupplung übertragenen Schleppmoments erreicht wird, d. h. es wird eine gezielte Erhöhung des Schleppmoments im Leerlauf vorgenommen. Eine derartige Erhöhung des Schleppmoments kann bspw. durch eine Erhöhung der Kühlölmenge in der Kupplung erreicht werden. Vorteilhafterweise wird Dabei der Schlupf in der Kupplung sichergestellt, z. B. durch Einlegen einer Gangstufe des dieser Kupplung zugeordneten Getriebes.

Alternativ oder zusätzlich kann unter der Voraussetzung, dass im (Teil-) Getriebe kein Gang eingelegt ist, die diesem (Teil-)Getriebe zugeordnete Kupplung mit einem vorgegebenen Druckwert beaufschlagt werden, wobei der Druckwert variabel sein kann. Dadurch ergibt sich ein vom ausgeübten Druck auf die Kupplung abhängiges Schleppmoment in der sog. Drehdurchführung.

Alternativ oder zusätzlich kann nach Schließen der Kupplung zur Übertragung eines bestimmten Moments ohne eingelegten Gang eine Synchronisationsvorrichtung in einer vorbestimmten Form (z. B. dauernd oder pulsierend) betätigt werden. Dabei ist das maximal an der Synchronisationsvorrichtung aufzubringende Synchronisationsmoment das Kupplungsmoment, wobei die Synchronisation dieser zwar kleinen aber dauerhaft aufzubringenden Belastung standhalten muss. Die Getriebesteuerung wird im Leerlauf somit derart angepasst, dass auf die bei nicht eingelegtem Gang geschlossene Kupplung mittels einer Synchronisationsvorrichtung ein vorgegebenes Synchronisationsmoment aufgebracht wird. Das Synchronisationsmoment erzeugt dann ein auf die Steckzahnverbindung wirkendes Schleppmoment.

Wenn es aufgrund der Radsatzarchitektur möglich ist, in einem ersten Teilgetriebe den Rückwärtsgang, und in einem zweiten Teilgetriebe einen Vorwärtsgang einzulegen (z. B. bei Doppelkupplungsgetrieben), kann die Getriebesteuerung im Leerlauf bei entsprechender Gangstellung auch derart angepasst werden, dass an beiden den oben genannten Teilgetrieben zugeordneten Kupplungen ein um den vorzeichenbehafteten Gangsprung korrigiertes Moment aufgebracht wird, um am Abtrieb letztendlich "momentenneutral" zu sein, d. h. die Summe der sich einstellenden Kupplungsmomente an den beiden Kupplungen ist am Getriebeausgang in etwa Null.

Schließlich ist es auch denkbar, zur Erhöhung des übertragenen Drehmoments an der Steckzahnverbindung die Getriebesteuerung im Leerlauf derart anzupassen, dass bei eingelegter Parkstufe und eingelegter Gangstufe im entsprechenden (Teil-)Getriebe die entsprechende Kupplung zumindest soweit betätigt wird, dass das von der Kupplung übertragene Kupplungsmoment zur Eliminierung des Geräusches ausreichend groß ist.

Da die oben genannten Maßnahmen aufgrund verschiedener Randbedingungen (Getriebeart, Situation) zur Erhöhung des übertragenen Drehmoments unterschiedlich geeignet sind, kann es sinnvoll sein, die oben beschriebenen Einzelmaßnahmen zu kombinieren oder situationsabhängig alternierend anzuwenden. Dies würde bedeuten, dass die Einzelmaßnahmen zu verschiedenen Zeitpunkten (also nacheinander) und/oder in verschiedenen Kombinationsmöglichkeiten gleichzeitig vorgenommen werden, wobei sich die Anteile der Maßnahmen jeweils zwischen 0% und 100% bewegen können. Dadurch ist es auf einfache Weise möglich, getriebe- und situationsspezifische Lösungen zur Geräuschreduzierung im Leerlauf zu finden, ohne die Nachteile einzelner Maßnahmen in Kauf nehmen zu müssen.

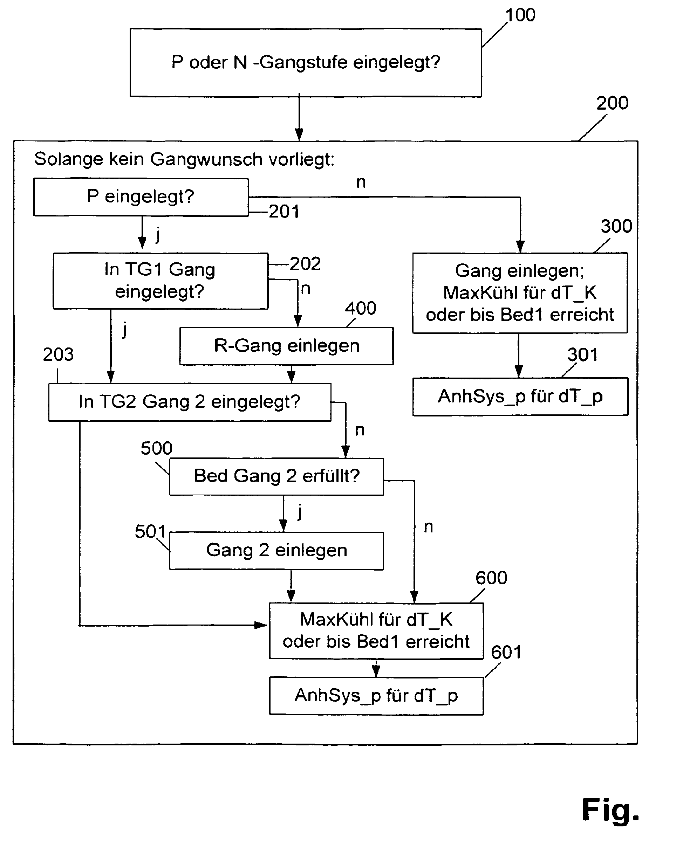

Anhand des nachfolgenden Ausführungsbeispiels wird die Erfindung nochmals näher erläutert. Dabei zeigt die einzige Figur ein stark vereinfachtes Ablaufdiagramm zur Geräuschreduzierung der im Antriebsstrang aufgrund der mit Spiel behafteten Steckzahnverbindung zwischen der motorseitigen Antriebseinheit und der Getriebeeingangswelle hervorgerufenen Geräusche durch Anpassung der Getriebesteuerung am Beispiel eines Doppelkupplungsgetriebes. Ein Doppelkupplungsgetriebe besteht in der Regel aus 2 Teilgetrieben, wobei die einzelnen Gänge auf die beiden Teilgetriebe aufgeteilt sind. In diesem Beispiel wird davon ausgegangen, dass das erste Teilgetriebe zumindest den Rückwärtsgang, und das zweite Teilgetriebe die 2. Gangstufe umfasst. Jedem Teilgetriebe ist eine separate Kupplung zugeordnet.

Zu Beginn des Verfahrens wird im Schritt 100 abgefragt, ob sich das Getriebe in Neutralstellung N befindet oder ob die Parkstufe P eingelegt ist. Zusätzlich können noch weitere Parameter, wie z. B. die Fahrzeuggeschwindigkeit abgefragt werden und in die Entscheidung zum Einleiten der Getriebesteuerungsanpassung zur Geräuschreduzierung einfließen.

Sind oben genannte Bedingungen erfüllt, wird zum Schritt 200 übergegangen, in dem die Anpassung der Getriebesteuerung zur Geräuschreduzierung vorgenommen wird. Dabei wird unter der Voraussetzung dass kein Gangwunsch des Fahrers erkennbar ist, die aktuelle Getriebesituation analysiert und anhand des Situationsergebnisses entsprechende Maßnahmen eingeleitet.

Zu Beginn wird im Schritt 201 abgefragt, ob die Parkstufe P eingelegt ist. Ist diese nicht eingelegt (was beutet, dass sich das Getriebe in Neutralstellung N befindet), wird als Maßnahme zur Geräuschreduzierung die Getriebesteuerung im Schritt 300 derart angepasst, dass ein Gang in zumindest einem Teilgetriebe eingelegt und eine Subroutine MaxKühl gestartet wird. Das Starten der Subroutine MaxKühl führt zu einer Erhöhung der Kühlölmenge, was wiederum zu einer gezielten Erhöhung des Schleppmoments in der entsprechenden Kupplung bzw. in beiden Kupplungen führt. Diese Subroutine MaxKühl wird beendet, wenn ein vorgegebenes Zeitintervall dT_K abgelaufen ist oder eine Bremsbetätigung erkannt wird. Weiter wird eine Subroutine Anh-Sys_p gestartet (Schritt 301), welche eine Erhöhung des Systemsdrucks und somit eine Erhöhung des Pumpenaufnahmemoments der Hydraulikpumpe verursacht. Diese Subroutine AnhSys_p wird beendet, wenn ein vorgegebenes Zeitintervall dT_p abgelaufen ist.

Wird im Schritt 201 erkannt, dass sich das Getriebe in Parkstellung P befindet, wird in einem nächsten Schritt 202 abgefragt, ob in einem ersten Teilgetriebe TG1 (dem auch der Rückwärtsgang R zugeordnet ist) ein Gang eingelegt ist. Ist dies nicht der Fall, wird der Rückwärtsgang R eingelegt (Schritt 400). Je nach Ausgestaltung des Getriebes kann auch ein beliebiger anderer Gang in diesem ersten Teilgetriebe eingelegt werden. Sobald der Rückwärtsgang R eingelegt ist, wird zu Schritt 203 übergegangen. Ebenso wird von Schritt 202 in Schritt 203 übergegangen, wenn erkannt wurde, dass bereits irgendein Gang im ersten Teilgetriebe TG1 eingelegt ist.

Als nächstes wird im Schritt 203 das zweite Teilgetriebe TG2 dahingehend überprüft, ob die 2. Gangsstufe eingelegt ist. Ist dies nicht der Fall wird in einem nächsten Schritt 500 überprüft, ob alle vorgegebenen Bedingungen, die ein Einlegen des 2. Gangs erlauben, erfüllt sind. Ist dies der Fall, wird im zweiten Teilgetriebe TG2 die zweite Gangsstufe eingelegt (Schritt 501).

Unabhängig davon, ob die zweite Gangstufe bereits eingelegt war (Schritt 203), eingelegt wurde (Schritt 501) oder ein Einlegen der 2. Gangsstufe nicht erlaubt ist (Schritt 500), wird anschließend zu den Schritten 600 und 601 übergegangen. Dabei werden anlog den Schritten 300 und 301 die Subroutinen MAxKühl und AnhSys_p gestartet.

Die vorgenommen Abfragen und eingeleitet Maßnahmen werden zusätzlich zu oben stehenden Abbruchsbedingungen auch dann abgebrochen, wenn ein Gangwunsch erkennbar ist. Alternativ zu diesem Ausführungsbeispiel sind auch beliebig andere Kombinationen zur Geräuschreduzierung durch Erhöhung des übertragenen Drehmoments an der Schnittstelle denkbar. Insgesamt gesehen ergibt sich durch das erfindungsgemäße Verfahren der Vorteil, dass durch die beschriebenen softwareseitigen Maßnahmen das störende Geräusch im Leerlauf bei Handschaltgetrieben mit steuerbarer Öldruckversorgung und/oder automatisierter Anfahrkupplung zumindest abgemildert werden kann.

## Patentansprüche

1. Verfahren zur Geräuschreduzierung im Antriebsstrang eines Kraftfahrzeugs mit automatisiertem Getriebe oder Handschaltgetriebe mit steuerbarer Öldruckversorgung und/oder automatisierter Anfahrkupplung, wobei die motorseitige Antriebseinheit durch eine Steckzahnverbindung mit der Getriebeeingangswelle verbunden ist und die Geräusche im Antriebsstrang aufgrund der mit Spiel behafteten Steckzahnverbindung zwischen der motorseitigen Antriebseinheit und der Getriebeeingangswelle hervorgerufen werden, **dadurch gekennzeichnet, dass** zur Geräuschreduzierung eine derartige Anpassung der Getriebesteuerung im Leerlauf (MaxKühl, AnhSys_p) vorgenommen wird, dass eine Erhöhung des Pumpen-aufnahmemoments einer Hydraulikpumpe verursacht wird, insbesondere derart, dass der Systemdruck erhöht wird (AnhSys_p) und/oder dass eine Erhöhung des von der Kupplung übertragenen Schleppmoments erreicht wird, wobei die beiden Maßnahmen situationsabhängig alternierend angewendet werden.

2. Verfahren nach Anspruch 1, **dadurch gekennzeichnet, dass** zur Erhöhung des von der Kupplung übertragenen Schleppmoments die Kühlölmenge in der nassen Kupplung erhöht wird.

3. Verfahren nach Anspruch 1 oder 2, **dadurch gekennzeichnet, dass** die Anpassung der Getriebesteuerung im Leerlauf derart ausgestaltet ist, dass über die Steckzahnverbindung ein erhöhtes Drehmoment übertragen wird.

4. Verfahren nach einem der vorangegangenen Ansprüche, **dadurch gekennzeichnet, dass** die Getriebesteuerung im Leerlauf derart angepasst wird, dass diejenige Kupplung, die dem Getriebe zugeordnet ist, bei dem kein Gang eingelegt ist, mit einem derartige Druckwert beaufschlagt wird, dass ein Schleppmoment übertragen wird.

5. Verfahren nach einem der vorangegangenen Ansprüche, **dadurch gekennzeichnet, dass** bei Getriebesystemen, bei denen für die verschiedenen Gangstufen zumindest zwei Teilgetriebe (TG1, TG2) vorhanden sind, die Getriebesteuerung im Leerlauf derart angepasst wird, dass in dem den Rückwärtsgang umfassenden Teil-Getriebe der Rückwärtsgang eingelegt wird, in einem zweiten Teil-Getriebe ein Vorwärtsgang eingelegt wird und die diesen Getrieben zugeordneten Kupplungen mit einem derartigen Druckwert beaufschlagt werden, dass die Summe der sich einstellenden Drehmomente am Getriebeausgang neutral ist.

6. Verfahren nach einem der vorangegangenen Ansprüche, **dadurch gekennzeichnet, dass** die Getriebesteuerung im Leerlauf derart angepasst wird, dass bei eingelegter Parkstufe (P) und eingelegter Gangstufe die entsprechende Kupplung zumindest soweit betätigt wird, dass das von der Kupplung übertragene Kupplungsmoment zur Geräuschreduzierung ausreichend groß ist.

7. Verfahren nach einem der vorangegangenen Ansprüche, **dadurch gekennzeichnet, dass** die Getriebesteuerung im Leerlauf derart angepasst wird, dass die Kupplung bei nicht eingelegtem Gang geschlossen wird und mittels einer Synchronisationsvorrichtung ein vorgegebenes Synchronisationsmoment aufgebracht wird.

## Claims

1. A method for reducing the noise in the drive train of a motor vehicle with an automatic or manual transmission with a controllable oil pressure supply and/or an automatic starting clutch, wherein the engine-side drive unit is connected to the transmission input shaft by a spline connection and the noises in the drive train are caused by the spline connection affected by play between the engine-side drive unit and the transmission input shaft, **characterised in that**, to reduce the noise, an adaptation of the transmission control is carried out when in neutral (MaxCool, AnhSys_p) such that an increase in the pump receiving torque of a hydraulic pump is caused, more especially in such a way that the system pressure is increased (AnhSys_p) and/or **in that** an increase in the drag torque transmitted by the clutch is achieved, the two measures being applied alternately depending on the situation.

2. A method according to claim 1, **characterised in that** to increase the drag torque transmitted by the clutch, the cooling oil quantity in the wet clutch is increased.

3. A method according to claim 1 or 2, **characterised in that** the adaptation of the transmission control when in neutral is configured such that an increased torque is transmitted by the spline connection.

4. A method according to any one of the preceding claims, **characterised in that** the transmission control when in neutral is adapted in such a way that the clutch associated with the transmission, in which no gear is engaged, has a pressure value applied such that a drag torque is transmitted.

5. A method according to any one of the preceding claims, **characterised in that** in transmission systems, in which at least two part transmissions (TG1, TG2) are present for the various gear stages, the transmission control when in neutral is adapted in such a way that the reverse gear is engaged in the part transmission comprising the reverse gear, and a forward gear is engaged in a second part transmission and the clutches associated with these transmissions have a pressure value applied such that the sum of the torques being adjusted is neutral at the transmission output.

6. A method according to any one of the preceding claims, **characterised in that** the transmission control when in neutral is adapted in such a way that when the park stage (P) is engaged and a gear stage is engaged, the corresponding clutch is at least actuated to such an extent that the clutch torque transmitted by the clutch is adequately large for noise reduction.

7. A method according to any one of the preceding claims, **characterised in that** the transmission control when in neutral is adapted in such a way that the clutch is closed when a gear is not engaged and a predetermined synchronisation torque is applied by means of a synchronisation device.

## Revendications

1. Procédé pour réduire le bruit de la ligne de transmission d'un véhicule automobile équipé d'une boîte de vitesses automatique ou d'une boîte de vitesses manuelle avec une alimentation commandée en liquide hydraulique sous pression et/ou un embrayage de démarrage automatisé, dans lequel l'unité d'entraînement, côté moteur, est reliée à l'arbre d'entrée de la boîte de vitesses par une liaison crabotée et les bruits de la ligne de transmission sont générés par le jeu de la liaison crabotée entre l'unité d'entraînement, côté moteur, et l'arbre d'entrée de la boîte de vitesses,
procédé **caractérisé en ce que**
pour réduire le bruit, on effectue une adaptation de la commande de la boîte de vitesses au ralenti (MaxKühl, AnhSys_p) de façon à augmenter le couple pris par une pompe hydraulique, notamment de façon à augmenter la pression du système (AnhSys_p) et/ou pour augmenter le couple d'inertie transmis par l'embrayage, les deux moyens étant appliqués en alternance selon la situation.

2. Procédé selon la revendication 1,
**caractérisé en ce que**
pour augmenter le couple d'inertie transmis par l'embrayage, on augmente la quantité de liquide hydraulique dans l'embrayage humide.

3. Procédé selon la revendication 1 ou 2,
**caractérisé en ce qu'**
on adapte la commande de la boîte de vitesses au ralenti de façon à transmettre un couple plus important par la liaison crabotée.

4. Procédé selon l'une des revendications précédentes,
**caractérisé en ce que**
la commande de la boîte de vitesses au ralenti est adaptée pour que l'embrayage associé à la boîte de vitesses soit sollicité par un niveau de pression assurant la transmission d'un couple d'inertie lorsqu'aucun rapport de vitesse n'est mis.

5. Procédé selon l'une des revendications précédentes,
**caractérisé en ce que**
dans le cas de systèmes de boîte de vitesses dans lesquelles pour les différents rapports de vitesse, on a au moins deux parties de boîte de vitesses (TG1, TG2), la commande de la boîte de vitesses étant adaptée au ralenti de façon que dans la partie de la boîte de vitesses comprenant le rapport de marche-arrière, on passe le rapport de marche-arrière et dans une seconde partie de la boîte de vitesses, on passe le rapport de marche avant et on sollicite les embrayages associés à ces parties de boîte de vitesses avec un niveau de pression tel que la somme des couples à la sortie de la boîte de vitesses soit neutre.

6. Procédé selon l'une des revendications précédentes,
**caractérisé en ce que**
la commande de la boîte de vitesses au ralenti est adaptée pour que lorsque la position de stationnement (P) est passée et qu'un rapport de vitesse est mis, l'embrayage correspondant est actionné au moins pour que le couple d'embrayage transmis par l'embrayage soit suffisamment important pour réduire le bruit.

7. Procédé selon l'une des revendications précédentes,
**caractérisé en ce que**
la commande de la boîte de vitesses au ralenti est adaptée pour que l'embrayage, soit fermé et qu'un dispositif de synchronisation applique un couple de synchronisation prédéfini lorsqu'aucun rapport n'est mis.
